# EUROPÄISCHE PATENTSCHRIFT

(11) **EP 2 807 959 B1**
(45) Veröffentlichungstag und Bekanntmachung des Hinweises auf die Patenterteilung: **07.10.2015**
(21) Anmeldenummer: 14168919.0
(22) Anmeldetag: 20.05.2014
(51) Int. Cl.: A47F 8/00

(54) **Verbindungssystem mit Ausfallsicherung für ein Schaufensterpuppenglied**
Connection system with drop-out protection for the extremities of a mannequin
Système d'attache avec sécurité anti-chute pour un élément de mannequin

(30) Priorität: 29.05.2013 DE 102013105534
(43) Veröffentlichungstag der Anmeldung: 03.12.2014
(73) Patentinhaber: VerTex GmbH, 72555 Metzingen (DE)
(72) Erfinder: Choy, Chog Hau, Tsing Yi, N.T. (HK)
(74) Vertreter: Kohler Schmid Möbus Patentanwälte

(56) Entgegenhaltungen:
- WO-A1-01/55495
- WO-A1-2007/008172
- WO-A1-2013/042450
- DD-A1- 245 127
- DE-U1- 20 300 087
- DE-U1-202010 006 843

## Beschreibung

Die Erfindung betrifft ein Verbindungssystem zur Befestigung einer Gliedmaße einer Präsentationspuppe an einem Torso der Präsentationspuppe, wobei das Verbindungssystem ein Torso-Verbindungselement und ein Gliedmaßen-Verbindungselement aufweist und das Gliedmaßen-Verbindungselement lösbar an dem Torso-Verbindungselement befestigbar ist, wobei eines der Verbindungselemente einen ersten Zapfen aufweist, der in eine erste Öffnung des anderen Verbindungselements einführbar ist.

Eine Präsentationspuppe ist eine in der Regel naturgetreu gestaltete Gliederpuppe bzw. Schaufensterpuppe in der Form eines Menschen, eines Tieres oder einer anderen Figur, die insbesondere zur Präsentation von Kleidungsstücken, beispielsweise in Kaufhäusern, eingesetzt wird. Die in der Regel menschengroßen Figuren sollen leicht transportierbar sein und platzsparend gelagert werden können. Darüber hinaus sollen sie einfach bekleidbar sein. Es hat sich darum als vorteilhaft erwiesen, die Gliedmaßen von Präsentationspuppen abnehmbar auszuführen. Dazu sind zwischen den Gliedmaßen und dem Torso Verbindungssysteme vorgesehen. Neben einfachen Steckverbindungen finden, wie in der US 2,595,485 A offenbart, Bajonettverschlüsse Verwendung. Rastverbindungen zur Verbindung von Gliedmaßen mit einem Torso sind aus der EP 2 386 226 A2 bekannt geworden.

Eine weitere Art eines Verbindungssystems wird in der DE 601 27 241 T2 beschrieben, bei der die Verbindung zwischen dem Torso und den Gliedmaßen durch ein Einfügen eines Zapfens in eine Öffnung realisiert und magnetisch gesichert wird.

Ein weiteres gattungsgemäßes Verbindungssystem ist auch aus dem Dokument WO 01/55495 bekannt.

Die bekannten magnetischen Verbindungssysteme haben jedoch den Nachteil, dass eine einmal gelöste Gliedmaße von dem Torso abfällt. Das versehentliche Lösen einer Gliedmaße kann beispielsweise beim Bekleiden oder Entkleiden einer Präsentationspuppe auftreten. In diesem Fall ist bei den bekannten Verbindungssystemen die Gliedmaße vollständig von dem Torso getrennt. Um dies zu vermeiden, kann zwar ein starker Magnet gewählt werden, allerdings sind die Gliedmaße dann nur sehr schwer oder gar nicht von dem Torso abtrennbar, wenn eine Abnahme der Gliedmaße gewollt ist.

Der Erfindung liegt daher die Aufgabe zu Grunde, ein Verbindungssystem zur Befestigung einer Gliedmaße einer Präsentationspuppe an einem Torso der Präsentationspuppe bereitzustellen, das sowohl einfach lösbar ist als auch eine sofortige ungewollte vollständige Abtrennung der Gliedmaße vermeidet.

Diese Aufgabe wird erfindungsgemäß durch ein Verbindungssystem nach Anspruch 1.

Wird die Gliedmaße der Präsentationspuppe versehentlich oder absichtlich abgenommen, so bildet der erste Vorsprung zusammen mit dem zweiten Vorsprung eine Ausfallsicherung, die verhindert, dass die Gliedmaße vollständig vom Torso abfällt. Die Gliedmaße kann dadurch nicht unkontrolliert vom Torso abfallen. Wird die Gliedmaße so bewegt, dass der zweite Vorsprung den ersten Vorsprung nicht mehr hintergreift, kann die Gliedmaße vollständig vom Torso abgenommen werden.

Der erste Vorsprung kann ein Auflager für den zweiten Vorsprung sein, derart, dass der erste Zapfen auf dem ersten Vorsprung aufliegt und gleichzeitig der zweite Vorsprung den ersten Vorsprung hintergreift.

Das Torso-Verbindungselement kann dabei den ersten Vorsprung und das Gliedmaßen-Verbindungselement die erste Öffnung aufweisen. Alternativ dazu kann das Gliedmaßen-Verbindungselement den ersten Vorsprung und das Torso-Verbindungselement die erste Öffnung aufweisen.

Das Torso-Verbindungselement kann Teil des Torsos sein. Alternativ dazu kann das Torso-Verbindungselement mit dem Torso verbindbar, das heißt an dem Torso befestigbar sein. Ebenso kann das Gliedmaßen-Verbindungselement Teil der Gliedmaße oder an der Gliedmaße befestigbar sein.

Das Gliedmaßen-Verbindungselement kann durch eine Rastverbindung oder dergleichen lösbar an dem Torso-Verbindungselement befestigbar sein. Erfindungsgemäß ist das Gliedmaßen-Verbindungselement durch eine Magnetverbindung an dem Torso-Verbindungselement befestigbar. Durch die Magnetverbindung wird eine beliebig oft verschleißfrei betätigbare Befestigungsmöglichkeit des Gliedmaßen-Verbindungselements am Torso-Verbindungselement geschaffen. Zur Ausbildung der Magnetverbindung können ein Magnet oder mehrere Magnete an dem Torso-Verbindungselement und/oder dem Gliedmaßen-Verbindungselement angeordnet oder ausgebildet sein. Weiterhin kann das Torso-Verbindungselement und/oder das Gliedmaßen-Verbindungselement zumindest teilweise aus einem magnetisierbaren Metall ausgebildet sein.

Das Torso-Verbindungselement und/oder das Gliedmaßen-Verbindungselement können durch Befestigungsmittel, wie Schrauben, Nägel, Klebstoff oder dergleichen am Torso bzw. der Gliedmaße befestigbar sein. Vorzugsweise weisen jedoch das Torso-Verbindungselement und/oder das Gliedmaßen-Verbindungselement zumindest ein Befestigungsmittel, insbesondere mehrere Befestigungsmittel, in Form eines Blechstreifens auf. Durch einen oder mehrere solcher Blechstreifen ist das Torso-Verbindungselement und/oder das Gliedmaßen-Verbindungselement sicher in den Torso bzw. die Gliedmaße einmodellierbar. Mit anderen Worten kann das Torso-Verbindungselement und/oder das Gliedmaßen-Verbindungselement auf einfache Art und Weise in eine Modelliermasse eingebettet werden, aus der ein Torso bzw. eine Gliedmaße geformt wird.

Bei der Gliedmaße der Präsentationspuppe handelt es sich vorzugsweise um einen Arm. Das Verbindungssystem kann in diesem Fall als Schultergelenk zum Einsatz kommen.

Vorzugsweise ist der zweite Vorsprung in einem vorderen Bereich des ersten Zapfens ausgebildet, der beim Verbinden der beiden Verbindungselemente zuerst in die erste Öffnung eingeführt wird. Dadurch kann die Gliedmaße ein Stück weit aus dem Torso herausgezogen werden, bevor die Ausfallsicherung greift, das heißt bevor der zweite Vorsprung den ersten Vorsprung unmittelbar hintergreift. Hierdurch kann die Gliedmaße relativ zum Torso bewegt werden, ohne dass die Gliedmaße vollständig abfällt. Eine solche Bewegungsfreiheit der Gliedmaße kann insbesondere beim Bekleiden und Entkleiden einer Präsentationspuppe sehr hilfreich sein.

In bevorzugter Ausgestaltung des Verbindungssystems ist der erste Zapfen sich von einem Grundkörper des Verbindungselements, an dem der erste Zapfen angeordnet oder ausgebildet ist, zu dem zweiten Vorsprung hin verjüngend ausgebildet. Anders gesagt weist der erste Zapfen zu dem zweiten Vorsprung hin einen kleineren Querschnitt auf, als in dem Bereich, in dem der erste Zapfen an dem Grundkörper des Verbindungselements angeordnet oder ausgebildet ist. Durch die Verjüngung entsteht ein Spielraum für den Zapfen, sodass dieser zum vollständigen Abtrennen der Gliedmaße angehoben werden kann.

Der erste Vorsprung kann durch einen Rand der ersten Öffnung ausgebildet werden. Der erste Vorsprung kann dadurch auf kostengünstige und einfache Art und Weise durch Bohren, Stanzen oder dergleichen der ersten Öffnung hergestellt werden.

Der vordere Bereich des ersten Zapfens, der beim Verbinden der Verbindungselemente zuerst in die erste Öffnung einführbar ist, kann teilweise kugelförmig ausgebildet sein, wobei der zweite Vorsprung durch einen Übergang zwischen dem kugelförmigen vorderen Bereich und einem weiteren Bereich des ersten Zapfens ausgebildet wird. Die kugelförmige Ausbildung des vorderen Bereichs des ersten Zapfens ermöglicht dabei ein einfaches Einführen des ersten Zapfens in die erste Öffnung. Dies ist insbesondere deshalb vorteilhaft, weil ein Benutzer der Präsentationspuppe die erste Öffnung beim Bekleiden und Entkleiden der Puppe meist nicht sieht, da diese in der Regel durch ein Bekleidungsstück, insbesondere durch einen Hemdsärmel, verdeckt wird.

Der Übergang kann eine Kerbe und/oder Stufe aufweisen. Durch die Kerbe und/oder Stufe kann eine besonders zuverlässige Ausfallsicherung ausgebildet werden.

Erfindungsgemäß steht der erste Zapfen in einem Winkel zwischen 1° und 89°, insbesondere zwischen 72° und 82°, von einem Grundkörper des Verbindungselements ab, an dem der erste Zapfen ausgebildet oder angeordnet ist. Der erste Zapfen kann dadurch schräg von oben in die erste Öffnung eingeführt werden. Das Verbindungssystem ist in diesem Fall besonders ausfallsicher.

In besonders bevorzugter Ausgestaltung der Erfindung ist der zweite Vorsprung dabei an dem Teil des ersten Zapfens angeordnet oder ausgebildet, der den kleinsten Öffnungswinkel zu dem Grundkörper aufweist. Ist beispielsweise der Zapfen schräg nach unten abstehend an dem Grundkörper angeordnet oder ausgebildet, so weist der Zapfen den zweiten Vorsprung vorzugsweise an der Unterseite des ersten Zapfens auf. Die Gliedmaße kann dadurch in großem Umfang bewegt werden, ohne dass eine vollständige Trennung von dem Torso erfolgt. Gleichzeitig muss die Gliedmaße nur leicht angehoben werden, um den Hintergriff des zweiten Vorsprungs am ersten Vorsprung zu lösen und die Gliedmaße vollständig von dem Torso zu trennen.

Der erste Zapfen weist einen Endbereich auf, der beim Verbinden der Verbindungselemente zuletzt in die erste Öffnung einführbar ist, wobei der Endbereich im Querschnitt die Form eines Vielecks aufweist und die erste Öffnung im Querschnitt die Form eines Vielecks aufweist, wobei der Endbereich zumindest teilweise formschlüssig, insbesondere vollständig formschlüssig, in die erste Öffnung einführbar ist. Beispielsweise kann der Querschnitt des ersten Zapfens in seinem Endbereich und der Querschnitt der ersten Öffnung die Form eines Sechsecks aufweisen. Die Gliedmaße kann dadurch im verbundenen Zustand der Verbindungselemente unverdrehbar an dem Torso gehalten werden.

Eine besonders verdrehsichere Verbindung der Gliedmaße an dem Torso kann dadurch erzielt werden, dass eines der Verbindungselemente einen zweiten Zapfen aufweist, der in eine zweite Öffnung des anderen Verbindungselements einführbar ist. Der zweite Zapfen kann dabei in einem Winkel von 90° von einem Grundkörper des Verbindungselements abstehen, an dem der zweite Zapfen ausgebildet oder angeordnet ist. Vorzugsweise ist der vordere Bereich des zweiten Zapfens, der zuerst in die zweite Öffnung einführbar ist, abgerundet ausgebildet. Hierdurch wird das Einführen des zweiten Zapfens in die zweite Öffnung erleichtert.

Besonders bevorzugt ist der erste Zapfen länger, insbesondere zumindest fünffach so lang, als der zweite Zapfen. In diesem Fall kann die Gliedmaße beim Greifen der Ausfallsicherung derart mit dem Torso verbunden sein, dass die Gliedmaße weit ausschwenkbar ist. Erst kurz vor dem vollständigen Zusammenführen der beiden Verbindungselemente wird der zweite Vorsprung in die zweite Öffnung eingeführt und die Gliedmaße verdrehsicher an dem Torso angeordnet.

Ein Grundkörper des Torso-Verbindungselements und/oder ein Grundkörper des Gliedmaßen-Verbindungselements kann plattenförmig ausgebildet sein. Vorzugsweise sind sowohl der Grundkörper des Torso-Verbindungselements als auch der Grundkörper des Gliedmaßen-Verbindungselements plattenförmig ausgebildet. Die zusammengefügten Verbindungselemente können dann an ihren plattenförmigen Grundkörpern aneinander anliegen. Hierdurch kann eine besonders gute Verbindung zwischen den Verbindungselementen erzielt werden.

Vorzugsweise ist an dem Grundkörper des Verbindungselements, an dem die erste Öffnung ausgebildet ist, eine erste Hülse angeordnet oder ausgebildet, deren Innenraum mit der ersten Öffnung verbunden ist. Hierdurch kann das Verbindungselement einmodelliert werden, wobei im Falle zusammengefügter Verbindungselemente noch Platz für den ersten Zapfen bleibt. Anders gesagt kann durch die erste Hülse ein von Modelliermasse frei gehaltener Raum geschaffen werden, in den der erste Zapfen beim Zusammenfügen der Verbindungselemente einführbar ist. Um einen Freiraum für den zweiten Zapfen in einer modellierten Präsentationspuppe zu schaffen, kann an dem Grundkörper des Verbindungselements, an dem die zweite Öffnung ausgebildet ist, eine zweite Hülse angeordnet oder ausgebildet sein, deren Innenraum mit der zweiten Öffnung verbunden ist.

Die Erfindung umfasst weiterhin eine Präsentationspuppe mit einem zuvor beschriebenen Verbindungssystem.

Weitere Merkmale und Vorteile der Erfindung ergeben sich aus der nachfolgenden detaillierten Beschreibung eines Ausführungsbeispiels der Erfindung, anhand der Figuren der Zeichnung, sowie aus den Ansprüchen.

Die in der Zeichnung dargestellten Merkmale sind nicht notwendigerweise maßstäblich zu verstehen und derart dargestellt, dass die erfindungsgemäßen Besonderheiten deutlich sichtbar gemacht werden können.

In der schematischen Zeichnung ist ein Ausführungsbeispiel der Erfindung dargestellt und in der nachfolgenden Beschreibung näher erläutert.

Es zeigen:
- Fig. 1: eine perspektivische Teilansicht einer Gliedmaße einer Präsentationspuppe mit einem Gliedmaßen-Verbindungselement;
- Fig. 2: eine teilweise Seitenansicht eines Torsos einer Präsentationspuppe mit einem Torso-Verbindungselement;
- Fig. 3: eine Draufsicht auf das Torso-Verbindungselement aus Fig. 3 in Alleinstellung;
- Fig. 4: einen Schnitt durch das Torso-Verbindungselement entlang der Linie A-A gemäß Fig. 3 ohne Befestigungsmittel;
- Fig. 5: eine Rückansicht des Torso-Verbindungselements aus Fig. 4;
- Fig. 6: eine Seitenansicht des Gliedmaßen-Verbindungselements aus Fig. 1 in Alleinstellung ohne Befestigungsmittel;
- Fig. 7: eine Rückansicht des Gliedmaßen-Verbindungselements aus Fig. 6;
- Fig. 8: eine Seitenansicht eines Verbindungssystems, umfassend das geschnitten dargestellte Torso-Verbindungselement gemäß Fig. 4 und daran angeordnetem Gliedmaßen-Verbindungselement gemäß Fig. 6;
- Fig. 9: eine Seitenansicht des Verbindungssystems aus Fig. 8 mit teilweise vom Torso-Verbindungselement getrenntem Gliedmaßen-Verbindungselement; und
- Fig. 10: eine teilweise Draufsicht auf die Präsentationspuppe, wobei sich das Verbindungssystem in der in Fig. 9 gezeigten Stellung befindet.

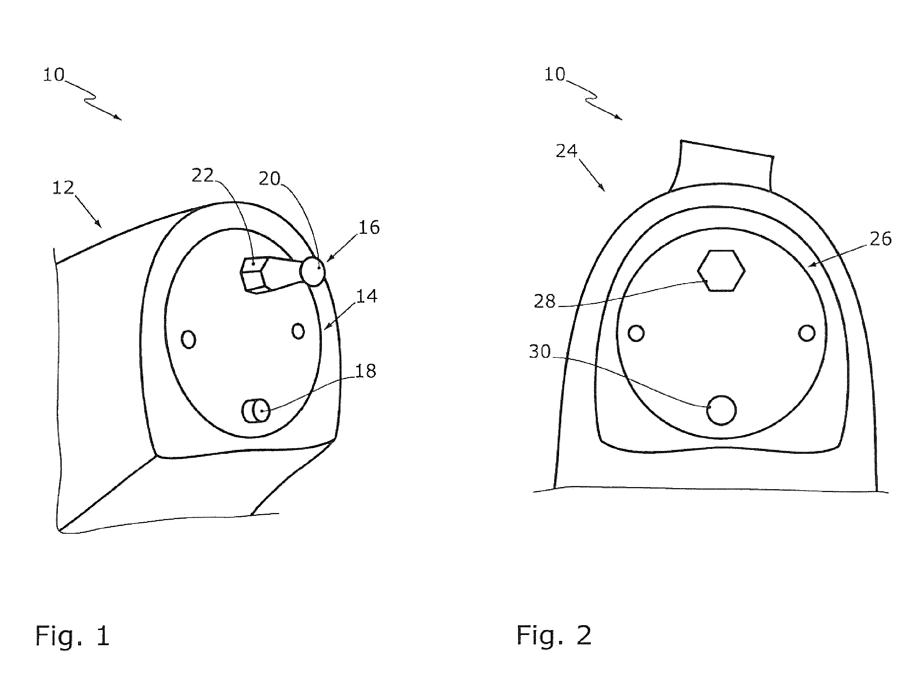

Fig. 1 zeigt eine Teilansicht einer erfindungsgemäßen Präsentationspuppe 10 mit einer Gliedmaße 12 in Form eines Armes. An der Gliedmaße 12 ist ein Gliedmaßen-Verbindungselement 14 befestigt. Das Gliedmaßen-Verbindungselement 14 ist dabei in die Gliedmaße 12 einmodelliert.

Das Gliedmaßen-Verbindungselement 14 weist einen ersten Zapfen 16 und einen zweiten Zapfen 18 auf. Ein vorderer Bereich 20 des ersten Zapfens 16 ist teilweise kugelförmig ausgebildet. Ein Endbereich 22 des ersten Zapfens 16 weist einen mehreckigen Querschnitt auf.

In Fig. 2 ist eine Seitenansicht eines Torsos 24 der Präsentationspuppe 10 dargestellt. An dem Torso 24 ist ein Torso-Verbindungselement 26 befestigt. Die Gliedmaße 12 gemäß Fig. 1 ist mit dem Torso 24 verbindbar. Zu dieser Verbindung wird der erste Zapfen 16 des Gliedmaßen-Verbindungselements 14 aus Fig. 1 in eine erste Öffnung 28 des Torso-Verbindungselements 26 gemäß Fig. 2 eingeführt. Der in Fig. 1 sichtbare mehreckige Endbereich 22 des ersten Zapfens 16 passt dabei formschlüssig in die im Querschnitt ebenfalls mehreckig ausgebildete erste Öffnung 28 des Torso-Verbindungselements gemäß Fig. 2. Weiterhin wird bei der Verbindung von Gliedmaße und Torso der zweite Zapfen 18 gemäß Fig. 1 in eine zweite Öffnung 30 gemäß Fig. 2 eingeführt. Die Gliedmaße 12 kann dadurch verdrehsicher am Torso 24 angeordnet werden.

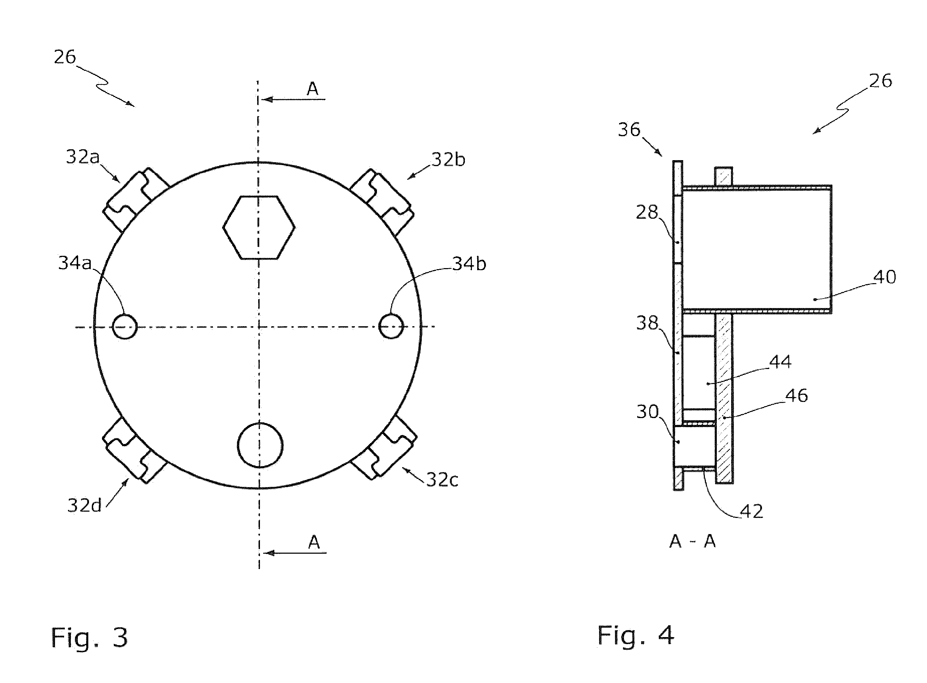

Fig. 3 zeigt eine Draufsicht auf das Torso-Verbindungselement 26 gemäß Fig. 2, jedoch ohne den Torso 24. Aus einem Vergleich der Fig. 3 mit der Fig. 2 wird ersichtlich, dass das Torso-Verbindungselement 26 vier Befestigungsmittel 32a-32d in Form von Blechstreifen aufweist, die in den Torso 24 einmodelliert sind. Das Torso-Verbindungselement 26 kann dadurch sehr sicher und fest an dem Torso 24 befestigt werden. Eines oder mehrere der Befestigungsmittel 32a-32d können dabei eines oder mehrere Löcher (nicht gezeigt) aufweisen, um eine besonders feste Verbindung des Torso-Verbindungselements 26 mit dem Torso 24 zu erreichen. Zusätzlich zu den Befestigungsmitteln 32a-32d weist das Torso-Verbindungselement 26 zwei Durchgangsausnehmungen 34a, 34b auf, durch die Schrauben, Nägel oder dergleichen führbar sind, um das Torso-Verbindungsmittel 26 befestigen zu können.

Aus Gründen der Übersichtlichkeit sind die Befestigungsmittel 32a-32d in den nachfolgenden Darstellungen nicht gezeigt. Weiterhin weist auch das Gliedmaßen-Verbindungselement 12 (siehe Fig. 1) analog zu den Befestigungsmitteln 32a-32d ausgebildete Befestigungsmittel in Form von Blechstreifen auf, durch die das Gliedmaßen-Verbindungselement 12 einmodellierbar ist, die aus Gründen der Übersichtlichkeit ebenfalls nicht dargestellt werden.

Fig. 4 zeigt eine Schnittdarstellung des Torso-Verbindungselements 26 gemäß Fig. 3 entlang der Linie A-A. Das Torso-Verbindungselement 26 weist einen ersten Grundkörper 36 auf, der im Wesentlichen plattenförmig ausgebildet ist. Die erste Öffnung 28 und die zweite Öffnung 30 sind in einer ersten Stahlplatte 38 ausgebildet. Die erste Öffnung 28 ist mit dem Innenraum einer ersten Hülse 40 verbunden, die zweite Öffnung 30 ist mit dem Innenraum einer zweiten Hülse 42 verbunden. Die erste Stahlplatte 38 ist über einen ersten Magneten 44 und die zweite Hülse 42 mit einer zweiten Stahlplatte 46 verbunden.

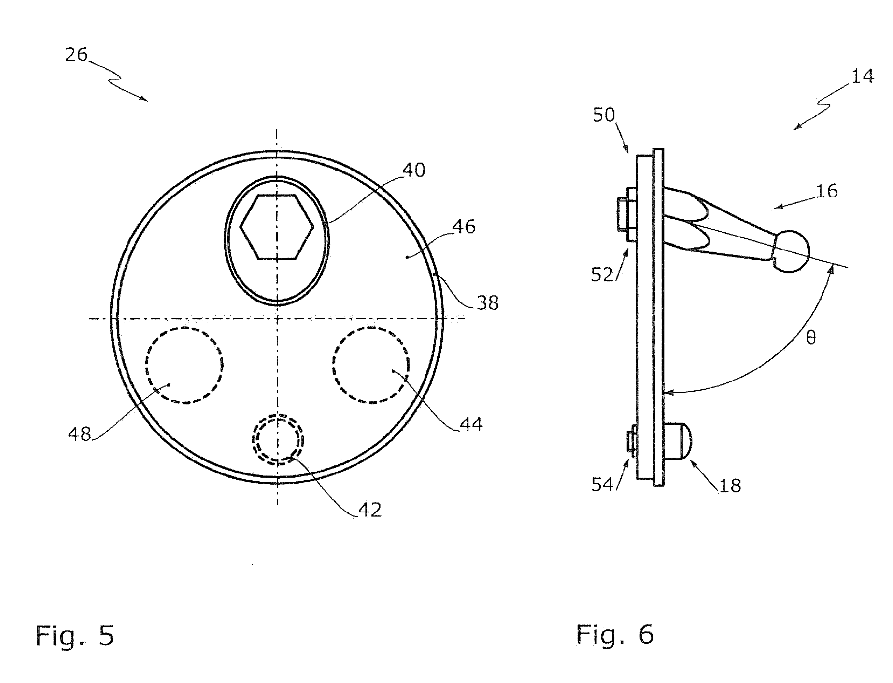

Fig. 5 zeigt eine Rückansicht des Torso-Verbindungselements 26. Hieraus ist ersichtlich, dass die zweite Stahlplatte 46 zusätzlich zu der zweiten Hülse 42 und dem ersten Magnet 44 mittels eines zweiten Magneten 48 mit der ersten Stahlplatte 38 verbunden ist. Die erste Hülse 40 ist im Querschnitt ellipsenförmig, die zweite Hülse 42 im Querschnitt kreisförmig ausgebildet. Hierdurch können die Hülsen 40, 42 auf einfache Art und Weise sehr stabil ausgebildet werden.

Fig. 6 zeigt das Gliedmaßen-Verbindungselement 14 in einer Seitenansicht. Aus der Darstellung wird ersichtlich, dass der erste Zapfen 16 in einem Winkel θ von ca. 77° relativ zu einem im Wesentlichen plattenförmigen zweiten Grundkörper 50 angeordnet ist. Hierdurch kann der erste Zapfen 16 des Gliedmaßen-Verbindungselements 14 auf einfache Art und Weise von schräg oben in die erste Öffnung 28 (siehe Fig. 4) eingeführt werden. Der erste Zapfen 16 ist durch eine erste Schraubverbindung 52 an dem zweiten Grundkörper 50 befestigt. Weiterhin ist der zweite Zapfen 18 durch eine zweite Schraubverbindung 54 an dem zweiten Grundkörper 50 befestigt. Um das Verbinden des Gliedmaßen-Verbindungselements 14 mit dem Torso-Verbindungselement 26 (siehe Fig. 4) zu erleichtern, ist der zweite Zapfen 18 in seinem vorderen Bereich abgerundet ausgebildet.

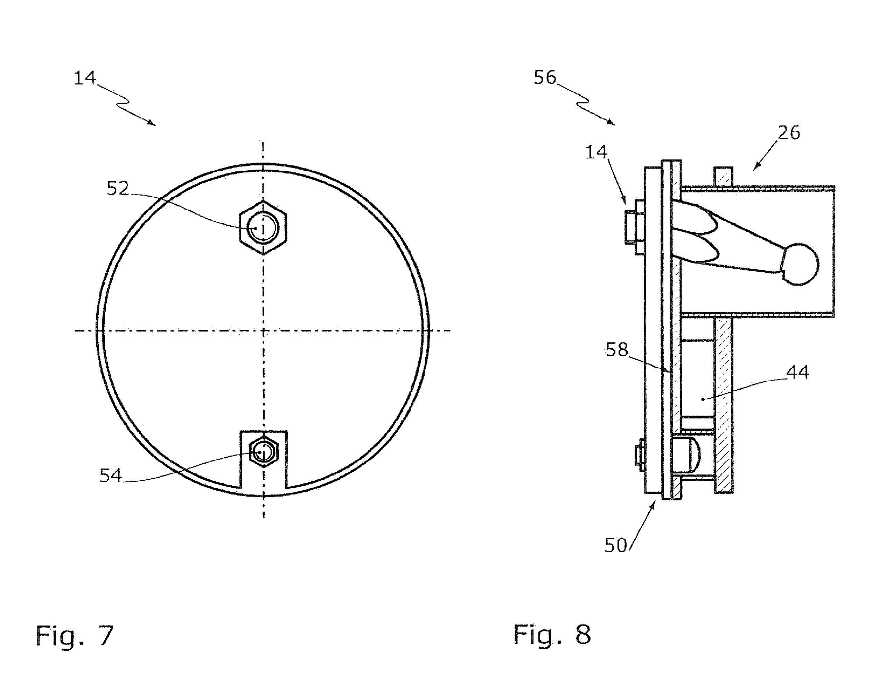

Fig. 7 zeigt eine Rückansicht des Gliedmaßen-Verbindungselements 14 mit den Schraubverbindungen 52, 54.

Fig. 8 zeigt ein erfindungsgemäßes Verbindungssystem 56, das aus dem Gliedmaßen-Verbindungselement 14 und dem Torso-Verbindungselement 26 (geschnitten dargestellt) besteht, wobei die beiden Verbindungselemente 14, 26 in verbundenem Zustand dargestellt sind. Das Gliedmaßen-Verbindungselement 14 wird durch eine Magnetverbindung 58 an dem Torso-Verbindungselement 26 gehalten. Die Magnetverbindung 58 umfasst den ersten Magnet 44, den in Fig. 8 nicht sichtbaren zweiten Magnet 48 (siehe Fig. 5) sowie den zweiten Grundkörper 50. Der zweite Grundkörper 50 wird durch die Magneten 44, 48 angezogen und gehalten.

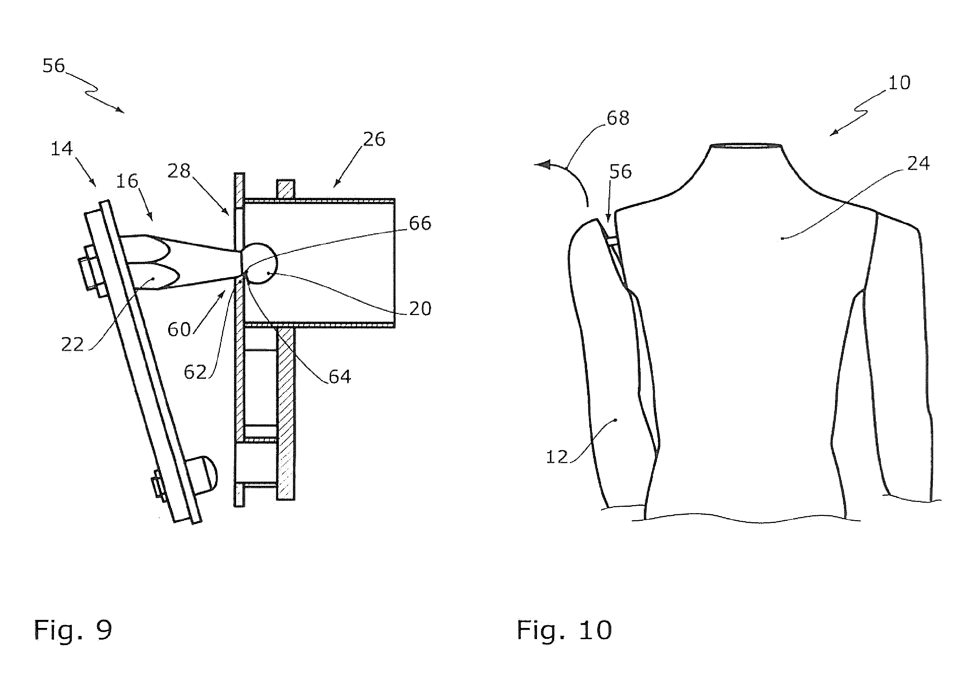

Fig. 9 zeigt das Verbindungssystem 56 in einer Stellung, in der das Gliedmaßen-Verbindungselement 14 aus der in Fig. 8 gezeigten Stellung von dem Torso-Verbindungselement 26 gelöst wurde, das Gliedmaßen-Verbindungselement 14 aber noch durch eine Ausfallsicherung 60 mit dem Torso-Verbindungselement 26 verbunden ist. Die Ausfallsicherung 60 umfasst einen ersten Vorsprung 62, der durch den Rand der ersten Öffnung 28 ausgebildet wird sowie einen zweiten Vorsprung 64 am ersten Zapfen 16. Der zweite Vorsprung 64 wird durch eine Kerbe 66 zwischen dem teilweise kugelförmigen vorderen Bereich 20 und dem Endbereich 22 des ersten Zapfens 16 ausgebildet. Der zweite Vorsprung 64 befindet sich dabei an einem Übergang zwischen dem teilweise kugelförmigen vorderen Bereich 20 und dem weiteren Bereich des ersten Zapfens 16.

Der zweite Vorsprung 64 hintergreift den ersten Vorsprung 62. Das Gliedmaßen-Verbindungselement 14 kann dadurch sicher an dem Torso-Verbindungselement 26 gehalten werden, auch wenn das Gliedmaßen-Verbindungselement 14 versehentlich oder gewollt aus der vollständigen Befestigungsstellung (siehe Fig. 8) gelöst wird.

Fig. 10 zeigt die Präsentationspuppe 10, wobei sich das Verbindungssystem 56 in der in Fig. 9 dargestellten "Ausfallsicherungsstellung" befindet. Die Gliedmaße 12 "baumelt" bzw. pendelt in dieser Stellung an dem Torso 24 und fällt nicht herunter. Soll die Gliedmaße 12 vollständig vom Torso 24 abgenommen werden, so kann sie in Richtung eines Pfeils 68 angehoben und vom Torso entfernt werden.

Wird die Gliedmaße 12 nach oben zur Schulter des Torso 24 verschwenkt, verkantet der erste Zapfen 16 mit der ersten Öffnung 28 und die Gliedmaße 12 kann nicht weiter nach oben verschwenkt oder vom Torso 24 abgenommen werden. Nur wie in Fig. 9 gezeigt, kann die Gliedmaße 12 durch ein Anheben aus der Arretierung vom Torso 24 vollständig gelöst werden.

Zusammenfassend betrifft die Erfindung ein Verbindungssystem für eine Präsentationspuppe, mit dem eine Gliedmaße der Präsentationspuppe lösbar mit einem Torso der Präsentationspuppe verbunden werden kann. Das Verbindungssystem stellt dabei die Schnittstelle zwischen Gliedmaße und Torso dar. In vollständig befestigter Stellung wird ein gliedmaßenseitiges Gliedmaßen-Verbindungselement magnetisch an einem torsoseitigen Torso-Verbindungselement gehalten. Im Falle eines Lösens der magnetischen Verbindung wird ein erster Vorsprung im Bereich einer ersten Öffnung eines der Verbindungselemente von einem zweiten Vorsprung hintergriffen, der an einem ersten Zapfen des anderen Verbindungselements angeordnet oder ausgebildet ist. Der erste Vorsprung und der zweite Vorsprung stellen dadurch eine Ausfallsicherung dar, die verhindert, dass die Gliedmaße beim Lösen der magnetischen Verbindung herunterfällt.

## Patentansprüche

1. Verbindungssystem (56) zur Befestigung einer Gliedmaße (12) einer Präsentationspuppe (10) an einem Torso (24) der Präsentationspuppe (10), wobei das Verbindungssystem (56) ein Torso-Verbindungselement (26) und ein Gliedmaßen-Verbindungselement (14) aufweist und das Gliedmaßen-Verbindungselement (14) lösbar an dem Torso-Verbindungselement (26) befestigbar ist, wobei das Gliedmaßen-Verbindungselement (14) durch eine Magnetverbindung an dem Torso-Verbindungselement (26) befestig ist, wobei eines (14) der Verbindungselemente (14 ,26) einen ersten Zapfen (16) aufweist, der in eine erste Öffnung (28) des anderen (26) der Verbindungselemente (14, 26) einführbar ist, **dadurch gekennzeichnet, dass** im Bereich der ersten Öffnung (28) ein erster Vorsprung (62) vorgesehen ist, der in nicht vollständig verbundenem Zustand der Verbindungselemente (14,26) durch einen zweiten Vorsprung (64) am ersten Zapfen (16) hintergreifbar ist, wobei der erste Zapfen (16) einen Endbereich (22) aufweist, der beim Verbinden der Verbindungselemente (14, 26) zuletzt in die erste Öffnung (28) einführbar ist, wobei der Endbereich (22) im Querschnitt die Form eines Vielecks aufweist und die erste Öffnung (28) im Querschnitt die Form eines Vielecks aufweist und der Endbereich (22) zumindest teilweise formschlüssig in die erste Öffnung (28) einführbar ist, wobei der erste Zapfen (16) in einem Winkel zwischen 1° und 89 von einem Grundkörper (50) des eines (14) der Verbindungselemente (14 ,26) absteht, an dem der erste Zapfen (16) ausgebildet oder angeordnet ist.

2. Verbindungssystem nach Anspruch 1, **dadurch gekennzeichnet, dass** der erste Vorsprung (62) durch einen Rand der ersten Öffnung (28) ausgebildet wird.

3. Verbindungssystem nach Anspruch 1 oder 2, **dadurch gekennzeichnet, dass** der vordere Bereich (20) des ersten Zapfens (16), der beim Verbinden der Verbindungselemente (14, 26) zuerst in die erste Öffnung (28) einführbar ist, teilweise kugelförmig ausgebildet ist, wobei der zweite Vorsprung (64) durch einen Übergang zwischen dem kugelförmigen vorderen Bereich (20) und einem weiteren Bereich des ersten Zapfens (16) ausgebildet wird.

4. Verbindungssystem nach einem der vorhergehenden Ansprüche, **dadurch gekennzeichnet, dass** an dem Grundkörper (36) des Verbindungselements (26), an dem die erste Öffnung (28) ausgebildet ist, eine erste Hülse (40) angeordnet oder ausgebildet ist, deren Innenraum mit der ersten Öffnung (28) verbunden ist.

5. Verbindungssystem nach einem der vorhergehenden Ansprüche, **dadurch gekennzeichnet, dass** eines der Verbindungselemente (14) einen zweiten Zapfen (18) aufweist, der in eine zweite Öffnung (30) des anderen Verbindungselements (26) einführbar ist.

6. Verbindungssystem nach Anspruch 5, **dadurch gekennzeichnet, dass** der erste Zapfen (16) länger ist, insbesondere zumindest fünffach so lang ist, als der zweite Zapfen (18).

7. Verbindungssystem nach Anspruch 5 oder 6, **dadurch gekennzeichnet, dass** an dem Grundkörper (36) des Verbindungselements (26), an dem die zweite Öffnung (28) ausgebildet ist, eine zweite Hülse (42) angeordnet oder ausgebildet ist, deren Innenraum mit der zweiten Öffnung (30) verbunden ist.

8. Präsentationspuppe (10) mit einem Verbindungssystem (56) nach einem der vorhergehenden Ansprüche.

## Claims

1. Connection system (56) for fastening a limb (12) of a mannequin (10) to a torso (24) of the mannequin (10), in which the connection system (56) has a torso connection element (26) and a limb connection element (14) and the limb connection element (14) may be fastened to the torso connection element (26) so that it may be detached, in which the limb connection element (14) may be fastened to the torso connection element (26) through a magnetic connection, in which one (14) of the connection elements (14, 26) has a first stud (16), which may be introduced into a first opening (28) of the other one (26) of the connection elements (14, 26), **characterised in that** in the area of the first opening (28) a first projection (62) is provided, which may reach through to the first stud (16) through a second projection (64) when the connection elements (14, 26) are not in the completely connected state, in which the first stud (16) has an end area (22), which finally may be introduced into the first opening (28) when the connection elements (14, 26) are connected, in which the end area (22) has the shape of a polygon in cross section and the first opening (28) has the shape of a polygon in cross section and the end area (22) may be introduced into the first opening (28) at least partly with positive locking, in which the first stud (16) sticks out from a main body (50) of one (14) of the connection elements (14, 26) at an angle of between 1° und 89, on which the first stud (16) is formed or arranged.

2. Connection system according to claim 1, **characterised in that** the first projection (62) is formed through an edge of the first opening (28).

3. Connection system according to claim 1 or 2, **characterised in that** the front area (20) of the first stud (16), which first may be introduced into the first opening (28) when the connection elements (14, 26) are connected, is made partly spherical, in which the second projection (64) is formed through a transition between the spherical front area (20) and a further area of the first stud (16).

4. Connection system according to one of the previous claims, **characterised in that** on the main body (36) of the connection element (26), on which the first opening (28) is formed, a first sleeve (40) is arranged or formed, the inner area of which is connected to the first opening (28).

5. Connection system according to one of the previous claims, **characterised in that** one of the connection elements (14) has a second stud (18), which may be introduced into the second opening (30) of the other connection element (26).

6. Connection system according to claim 5, **characterised in that** the first stud (16) is longer, particularly at least five times as long, than the second stud (18).

7. Connection system according to claim 5 or 6, **characterised in that** on the main body (36) of the connection element (26), on which the second opening (28) is formed, a second sleeve (42) is arranged or formed, the inner area of which is connected to the second opening (30).

8. Mannequin (10) with a connection system (56) according to one of the previous claims.

## Revendications

1. Système d'attache (56) pour la fixation d'un membre (12) d'un mannequin de présentation (10) à un torse (24) du mannequin de présentation (10), dans lequel le système d'attache (56) présente un élément d'attache de torse (26) et un élément d'attache de membre (14), et l'élément d'attache de membre (14) peut être fixé de façon amovible à l'élément d'attache de torse (26), dans lequel l'élément d'attache de membre (14) est fixé par une attache aimantée à l'élément d'attache de torse (26), dans lequel un (14) des éléments d'attache (14, 26) présente un premier tourillon (16) qui peut être introduit dans une première ouverture (28) de l'autre (26) des éléments d'attache (14, 26), **caractérisé en ce que**, dans la zone de la première ouverture (28), il est prévu une première saillie (62) qui, dans l'état non complètement attaché des éléments d'attache (14, 26), peut être agrippée par l'arrière par une deuxième saillie (64) sur le premier tourillon (16), dans lequel le premier tourillon (16) présente une zone d'extrémité (22) qui, lors de l'attachement des éléments d'attache (14, 26), peut être introduite en dernier dans la première ouverture (28), dans lequel la zone d'extrémité (22) présente une section transversale en forme de polygone et la première ouverture (28) présente une section transversale en forme de polygone, et la zone d'extrémité (22) peut être introduite dans la première ouverture (28) au moins en partie par liaison de forme, dans lequel le premier tourillon (16) dépasse, en formant un angle compris entre 1° et 89°, d'un corps de base (50) de l'un (14) des éléments d'attache (14, 26) sur lequel le premier tourillon (16) est constitué ou disposé.

2. Système d'attache selon la revendication 1, **caractérisé en ce que** la première saillie (62) est constituée par un bord de la première ouverture (28).

3. Système d'attache selon la revendication 1 ou 2, **caractérisé en ce que** la zone avant (20) du premier tourillon (16) qui peut être introduit en premier dans la première ouverture (28) lors de l'attachement des éléments d'attache (14, 26) est constituée partiellement en forme de sphère, dans lequel la deuxième saillie (64) est constituée par une transition entre la zone avant (20) en forme de sphère et une autre zone du premier tourillon (16).

4. Système d'attache selon l'une des revendications précédentes, **caractérisé en ce que**, sur le corps de base (36) de l'élément d'attache (26) sur lequel est constituée la première ouverture (28), il est disposé ou constitué une première douille (40) dont l'espace intérieur est raccordé à la première ouverture (28).

5. Système d'attache selon l'une des revendications précédentes, **caractérisé en ce qu'**un des éléments d'attache (14) présente un deuxième tourillon (18) qui peut être introduit dans une deuxième ouverture (30) de l'autre élément d'attache (26).

6. Système d'attache selon la revendication 5, **caractérisé en ce que** le premier tourillon (16) est plus long, en particulier au moins cinq fois plus long, que le deuxième tourillon (18).

7. Système d'attache selon la revendication 5 ou 6, **caractérisé en ce que**, sur le corps de base (36) de l'élément d'attache de torse (26) sur lequel est constituée la deuxième ouverture (28), il est disposé ou constitué une deuxième douille (42) dont l'espace intérieur est raccordé à la deuxième ouverture (30).

8. Mannequin de présentation (10) avec un système d'attache (56) selon l'une des revendications précédentes.
